# EUROPÄISCHE PATENTANMELDUNG

(11) **EP 3 851 715 A1**
(43) Veröffentlichungstag der Anmeldung: **21.07.2021**
(21) Anmeldenummer: 21152005.1
(22) Anmeldetag: 18.01.2021
(51) Int. Cl.: F16K 7/12, F16K 37/00

(54) **SYSTEM ZUM BETRIEB EINER PNEUMATIKEINRICHTUNG**

(30) Priorität: 20.01.2020 DE 102020101177
(71) Anmelder: SISTO Armaturen S.A., 6468 Echternach (LU)
(72) Erfinder: BRITZ, Robert, 6468 Echternach (LU); HACKENBERGER, Bernd, 6468 Echternach (LU); DIECKMANN, Thomas, 6468 Echternach (LU); HESS, Timo, 6468 Echternach (LU); SCHAAL, Andreas, 6468 Echternach (LU)
(74) Vertreter: Busch, Tobias

(57) **Zusammenfassung**

Die Erfindung betrifft ein System zum Betrieb einer Pneumatikeinrichtung (1). Dieses System weist eine Anordnung zum Datenaustausch auf.

## Beschreibung

Die Erfindung betrifft ein System zum Betrieb einer Pneumatikeinrichtung, das in und an einem Steuerluftanschluss integriert ist und eine Membran antreibt.

Beispielgebend sind Membranventile, die zur Dosierung von unterschiedlichen Fluiden eingesetzt werden können. Beispielsweise können Membranventile eingesetzt werden, um hochviskose bzw. sehr stark haftfähige Medien zu dosieren bzw. zu verteilen. Bei Membranventilen wird dabei wirksam eine Ablagerung und somit auch eine Kontamination verhindert. Ventile auf Basis des Membranprinzips sind die totraumärmsten Dosierarmaturen. Neben dem sehr geringen Totraumvolumen sind Membranventile zudem entleerungsoptimiert konstruiert, sodass eine rückstandsfreie Entfernung des Mediums ermöglicht wird.

Dies ist insbesondere bei pharmazeutischen Anlagen und Fertigungsprozessen von großer Bedeutung, da diese den hohen Ansprüchen einer strengen Validierung unterliegen, mit dem Ziel, eine gleichbleibende und reproduzierbare Qualität zu gewährleisten. Aus diesen Ansprüchen resultiert die Notwendigkeit, verschiedene Prozesse innerhalb einer Anlage fahren zu können. Neben dem eigentlichen Produktionsprozess sind dies in der Regel die Reinigung, Desinfektion und Sterilisation der Anlage. Membranventile haben sich aufgrund ihrer vorteilhaften Konstruktionsmerkmale als bevorzugte Armatur in der sterilen Prozesstechnik etabliert.

Um diese hohe Qualität in der sterilen Prozessindustrie gewährleisten zu können, wird in der Regel ein präventives Wartungskonzept praktiziert, was zu enormen Wartungskosten führt. Dabei werden in festgelegten Wartungszyklen die in der Regel noch guten Membranen einer Anlage ausgetauscht, um eine Prozessbeeinflussung durch fehlerhafte Membranen mit hoher Sicherheit zu vermeiden. Die Reduzierung der Betriebskosten einer verfahrenstechnischen Anlage kann beispielsweise durch optimale Wartungsprozesse erreicht werden. Eine reaktive Wartungsstrategie kann wegen der kritischen Prozesse nicht infrage kommen. Ein zukünftiger Weg könnte die zustandsorientierte Instandhaltung sein. Dabei sollen die Instandhaltungsmaßnahmen anhand des tatsächlichen Abnutzungsgrades der Komponenten geplant werden, sodass der vorhandene Abnutzungsvorrat besser ausgenutzt werden kann.

Die genannten Membranventile werden häufig mit entsprechenden pneumatischen Stelleinrichtungen angetrieben. In diesen wird ein Stellglied bewegt, indem ein druckbehaftetes Medium, insbesondere Druckluft bzw. Steuerluft, zu oder abgeführt wird. Die Versorgung einer derartigen Pneumatikeinrichtung mit Druckluft erfolgt über sogenannte Steuerluftanschlüsse.

Druckluft ist in der Prozesstechnik ein einfacher Energieträger, der sich vielseitig im Bereich der mechanischen Steuerung einsetzen lässt. Die Qualität der Druckluft ist ebenso ein wesentlicher Faktor wie die Dichtheit eines Systems. Die Pneumatikeinrichtungen werden gerne in explosionsgefährdeten Bereichen eingesetzt. Da ist es wichtig, dass bei Leckagen keine störenden und gefährlichen Stoffe austreten. Oft führt der Einsatz von Druckluft zu einem nachlässigen Umgang mit Leckagen, was wiederum zu einem erheblichen Energieverbrauch in Anlagen führen kann. Eine zustandsorientierte Instandhaltung sollte also ganzheitlich angelegt sein und sowohl das Membranventil als auch dessen Antrieb überwachen.

Grundlage für eine zustandsorientierte Instandhaltung ist das Sammeln verschiedener Zustandsdaten, die von Sensoren am Membranventil und/oder an der Pneumatikeinrichtung abgegriffen werden. Diese Daten müssen dann an ein übergeordnetes Überwachungssystem weitergeleitet werden. Auf Basis von intelligenten Algorithmen kann in einem Überwachungssystem der Zustand analysiert werden.

Die EP 2 984 533 B1 beschreibt den Einsatz von Sensoren an einem Membranventil zur Ermittlung des Betriebszustandes und ein Verfahren zu dessen Auswertung. Damit kann eine Aussage hinsichtlich des Stellzustandes getroffen werden. Mit einem solchen System lässt sich jedoch noch keine Aussage über den Verschleißzustand hinsichtlich einer zustandsorientierten Instandhaltung treffen. Die Abschätzung der Restlebensdauer einer Membran und die Vermeidung von ungeplanten Anlagenstillständen wegen Membranausfall ist hierdurch nicht möglich.

In der DE 10 2014 205 117 A1 ist die Einbringung einer elektronischen Schaltung in die Membrane beschrieben. Dabei handelt es sich vorzugsweise um eine Antenne, die durch leitfähige Partikel auf einer Elastomerlage ausgebildet wird. Hierüber lassen sich Betriebs- und Schaltzustände ermitteln, jedoch kann die Lebensdauer durch die veränderte Membrancharakteristik verkürzt sein. Auch hinsichtlich einer zustandsorientierten Instandhaltung bietet dieses System keine Lösung.

In der Patentanmeldung DE 10 2015 210 208 A1 wird ein Verfahren zum Ermitteln einer Zustandsgröße einer Ventilmembran eines elektronisch gesteuerten und motorisch angetriebenen Membranventils, sowie Membranventilsystems beschrieben. Bei der Zustandsgröße handelt es sich um die Membrandicke, die eine Aussage über den Verschleißzustand der Membran geben kann. Diese soll ermittelt werden, indem bei einer durch Kraftregelung konstanten Antriebskraft eine veränderte Membrandicke durch eine veränderte Position der Kolbenstange messbar wird. Außerdem soll eine Analyse der Schließgeschwindigkeit zur Identifizierung des Membranzustands herangezogen werden. Eine Zustandsüberwachungseinheit für pneumatisch angetriebene Membranventile ist nicht beschrieben. Das System ist zudem nicht einfach und kostengünstig nachrüstbar, da die komplette Antriebseinrichtung getauscht werden müsste.

Die DE 10 2015 210 210 A1 beschreibt ein Verfahren zur Diagnose eines Membranventils, sowie Diagnosesystem für ein Membranventil, das zunächst je eine Größe für die Membrane, das Ventil und den Betrieb des Ventils ermittelt und aus diesen Größen mittels eines Algorithmus eine Zustandsgröße für den Verschleiß (Restlebensdauer) bestimmt. Bei den Eingabegrößen kann es sich um statische Daten handeln, die auf einem lokalen Speicher oder in der Cloud gespeichert sind. Jedoch wird mindestens eine Größe von einem am Ventil positionierten Sensor geliefert. Das System kann nur durch eine komplizierte Nachrüstung bei schon installierten Membranventilen implementiert werden.

In der DE 10 2016 108 832 ist ein Verfahren zum Steuern eines Ventils sowie ein Ventil beschrieben, dass die zum Schließen benötigte Kraft als die zum Zeitpunkt mit Durchfluss Null wirkende Kraft ermittelt wird. Zur Belastungsbegrenzung und Erhöhung der Lebensdauer kann das Ventil dann nur noch mit der erforderlichen Schließkraft zuzüglich einer bestimmten Reserve schließen. Hier wird der Steuerdruck überwacht, jedoch ohne Analyse hinsichtlich einer zustandsorientierten Instandhaltung.

Aufgabe der Erfindung ist es, ein System zum Betrieb einer Pneumatikeinrichtung bereitzustellen, welches zuverlässig mindestens eine Zustandsgröße eines Membranventils und dessen Pneumatikeinrichtung ermittelt. Die Ermittlung soll während des regulären Membranbetriebes erfolgen können. Das System soll einfach an bestehenden Membranventilen und deren Pneumatikeinrichtung, insbesondere ohne Demontage, nachgerüstet werden können, ohne den laufenden Betrieb unterbrechen zu müssen. Dabei soll das System verkabelungsfrei betrieben werden können und keinen zusätzlichen Wartungsaufwand erzeugen. Die Membran und deren Betrieb soll nicht nachteilig beeinträchtigt werden. Das System soll möglichst problem- sowie unterbrechungsfrei laufen und soll sich auf möglichst preiswerte sowie besonders einfache Weise herstellen lassen.

Diese Aufgabe wird erfindungsgemäß durch ein System zum Betrieb einer Pneumatikeinrichtung gemäß den nebengeordneten Ansprüchen gelöst. Bevorzugte Varianten sind den Unteransprüchen, der Beschreibung und den Zeichnungen zu entnehmen.

Erfindungsgemäß wird am Steuerluftanschluss der Pneumatikeinrichtung eines Membranventils ein System zum Betrieb dieser Einrichtung angeschlossen. Dadurch ist der pneumatische Antrieb, insbesondere mindestens einer Antriebsgröße, eines Membranventils überwachbar. Die Überwachung durch mindestens einen Sensor bezieht sich auf den Druck, den Durchfluss, die Temperatur, des Hubs und der räumlichen Lage. Damit wird bei pneumatisch angetriebenen Membranventilen eine Funktionsüberwachung, eine zustandsorientierte Instandhaltung und ein Energiemonitoring ermöglicht. Integraler Bestandteil der Erfindung ist die drahtlose Kommunikation durch das Mittel zum Datenaustausch im Sinne des Internet der Dinge, speziell des industriellen Internet der Dinge, die eine einfache, flächendeckende Installation ermöglicht.

In einer vorteilhaften Ausgestaltung der Erfindung werden die Prozess- und Zustandsgrößen mittels mindestens einem Sensor erfasst. Als Sensoren bieten sich in vorteilhafter Weise Sensoren zur Erfassung von Schwingungen, Schall, Durchfluss, insbesondere Druck und/oder Kraft an, die zur Verformung der Membran eingesetzt werden. Diese stellen die wesentlichen Prozess- und Zustandsgrößen in einem Pneumatiksystem dar, aus denen sich Rückschlüsse auf den Zustand des Systems ziehen lassen. Die vorgenannten Messwerte können von jeweils einem Sensor für einen Messwert oder einem gemeinsamen Sensor, beispielsweise einem sogenannten Umweltsensor, erfasst werden.

In einer weiteren Ausgestaltung der Erfindung ist das Mittel zur Datenübertragung ein Funkkommunikationsmittel, insbesondere ein Nahfeldfunkmittel. Die drahtlose Kommunikation ist integraler Bestandteil des Systems zum Betrieb einer Pneumatikeinrichtung. Diese weist sowohl eine Nahfeld-Kommunikation über RFID, Bluetooth LE, Thread, Zigbee oder Ähnlichem auf, als auch eine Fernfeld-Kommunikation über WiFi, LPWan oder Mobilfunk-Standards wie GSM, LTE oder Ähnlichem. Um die Sicherheit der Datenübertragung zu gewährleisten und deren Datenübertragungsrate zu erhöhen, können auch mehrere Technologien kombiniert sein.

Vorteilhafterweise erfolgt die Energieversorgung bei dem Datenerfassungs- und Kommunikationssystem kabellos beispielsweise über eine Versorgungsbatterie. Es ist jedoch auch denkbar, dass die Datenerfassungseinheit die benötigte Energie aus der Funkschnittstelle entnimmt. In einer ganz besonders vorteilhaften Variante der Erfindung kann eine Eigenversorgung des Systems zum Betrieb einer Pneumatikeinrichtung durch "Energy Harvesting" realisiert sein. Eine besonders geeignete Möglichkeit ist die Energiegewinnung aus der beim Schalten des Ventils durchströmenden Druckluft, die eine in das System integrierte Turbine antreibt und mit einem Generator die Versorgungsenergie für die Elektronik bereitstellt. Eine eingebaute Batterie oder Akku dienen dazu, lange Phasen ohne Energiegewinnung zu überbrücken. Gleichzeitig kann bei dieser Variante die Drehzahl der Turbine als Durchflusssensor genutzt werden. Weiterhin können zur Energiegewinnung beispielsweise Temperaturunterschiede zwischen Steuerluft und Umgebungsluft, der Steuerdruck anhand eines Piezoelements, bei Anlagen im Freien kann auch elektromagnetische Strahlung mittels Solarzellen oder die Kraft der Ventilbewegung selbst genutzt.

Vorteilhafterweise ist ein Aktor in Form eines Magnetventils und/oder 3/2-Wegeventils und/oder 3/3 Wegeventils im System zum Betrieb einer Pneumatikeinrichtung integriert. Dadurch könnte der Druck permanent am System anliegen, wodurch die kabelungebundene Energieversorgung mittels Piezoelement sichergestellt wäre. Weiterhin würde ein entfernt angebrachtes Magnetventil für die zum Antrieb benötigte Steuerluft entfallen. Der integrierte Aktor ist über die integrierten Sensoren hinsichtlich seiner Funktion überwacht, wodurch die funktionale Sicherheit erhöht ist. Mittels der Elemente zur Informationseingabe und Informationsausgabe könnten Funktionstest (Partial Stroke, Full Stroke, etc.) durchgeführt werden. In einer besonders vorteilhaften Variante kann von dem System zum Betrieb einer Pneumatikeinrichtung sogar die Funktion eines Stellungsreglers durch den integrierten Aktor bzw. die integrierten Aktoren übernommen werden.

In einer Variante der Erfindung mit integrierten 3/3-Wegeventil wird der Steuerdruck durch die Nutzung des 3/3-Wegeventils als Dreipunktregler geregelt. Beispielsweise lassen sich Schwankungen des Steuerdrucks zur Schonung der Ventilmembran ausregeln. Für eine verlängerte Lebensdauer der Ventilmembran wird der Steuerdruck für besonders sanftes Schließen sowie Öffnen geregelt. In Kombination mit externem Wegesignal ist der Hub der Pneumatikeinrichtung besonders genau einstellbar und eine Schließkraftbegrenzung bzw. eine Hubbegrenzung realisierbar. Falls prozesstechnisch relevant, ist die teilweise Öffnung der Membran möglich.

Erfindungsgemäß ist im System zum Betrieb einer Pneumatikeinrichtung ein Element zum Drosseln der Steuerluft integriert. Auch auf diese Weise ist das besonders sanfte Schließen sowie Öffnen der Membran möglich, um die Lebensdauer der Membran zu erhöhen. In einer besonders vorteilhaften Variante wird das Drosselelement zur genauen Steuerdruckeinstellung eingesetzt, um alterungsspezifische Steuerdruck-Zeit-Verläufe zu erfassen, die in einem übergeordneten Analysesystem zur Bestimmung der Restlebensdauer genutzt werden können.

Vorteilhafterweise wird der im System zum Betrieb einer Pneumatikeinrichtung integrierte Durchflusssensor genutzt, um Steuerluftleckagen örtlich eingrenzen zu können. Mittels Leistungsbilanz kann der Steuerluftdurchfluss zur Ermittlung der Antriebsgeschwindigkeit genutzt werden.

Erfindungsgemäß wird das integrierte Sensorelement zur Positionsbestimmung genutzt, um in einem Wartungsfall eine genaue Positionsangabe über die kabelungebundene Datenübermittlung abzusetzen. Gerade in komplexen Anlagen der Prozessindustrie ist die zeitaufwändige und somit kostenintensive Ortung der betroffenen Ventilmembran und deren Pneumatikeinrichtung um ein Vielfaches einfacher.

In einer Variante der Erfindung ist ein Element zum Anschluss externer Sensoren integriert. Beispielsweise können prozesstechnisch relevante Größen aber auch Zustandsgrößen des Pneumatiksystems über externe Sensoren erfasst werden und über die drahtlose Datenübermittlung des Systems zum Betrieb einer Pneumatikeinrichtung an ein übergeordnetes Analyse- bzw. Prozessleitsystem weitergegeben werden.

Von Vorteil ist das im System integrierte Element zur akustischen und/oder optischen Informationsausgabe. Darüber wird beispielsweise die Funktionalität des Systems und/oder die Stellung des Aktors signalisiert. Weiterhin ist dadurch Wartungsbedarf signalisierbar.

Erfindungsgemäß ist das im System integrierte Element zur Informationseingabe für den Initialisierungsprozess verwendbar. Weiterhin ist eine manuelle Betätigung des integrierten Aktors und des Membranventils möglich. Darüber hinaus ist das Konfigurieren eines Wartungsprozesses ausführbar.

In einer einfachen Ausführung der Erfindung ist es vorstellbar, dass die Datenund/oder Energieversorgung kabelgebunden erfolgt.

Die drahtlose Datenübertragung und die kabellose Energieversorgung ermöglichen die einfache, flächendeckende Installation in industriellen Anlagen. Ein Vorteil dieser Erfindung ist der einfache und auch nachträgliche Einbau des Systems zum Betrieb einer Pneumatikeinrichtung am Steuerluftanschluss des Antriebs, welcher durch standardisierte Anschlussgewinde unkompliziert ausgeführt werden kann. Die Überwachungseinheit besitzt zwei pneumatische Anschlüsse, einen Versorgungsanschluss und einen Verbraucheranschluss, wobei es auch mehrere Verbraucheranschlüsse geben kann. In einer Ausführung besitzt die Überwachungseinheit am Verbraucheranschluss ein Außengewinde, das direkt in einen pneumatischen Antrieb eingeschraubt werden kann.

In einer Ausgestaltung des Verfahrens werden die erfassten Daten in einer Auswerteeinheit ausgewertet und das Auswerteergebnis durch die Mittel zur Datenübertragung an eine zentrale Steuereinheit übertragen. Dies hat den Vorteil, dass die Menge der zu übertragenden Daten reduziert wird.

Weitere Merkmale und Vorteile der Erfindung ergeben sich aus der Beschreibung von Ausführungsbeispielen anhand von Zeichnungen und aus den Zeichnungen selbst.

Dabei zeigt:
- Figur 1: ein System zum Betrieb einer Pneumatikeinrichtung,
- Figur 2: ein Membranventil mit einer Pneumatikeinrichtung und installiertem System zum Betrieb einer Pneumatikeinrichtung,
- Figur 3: eine Variante mit einem externen Druckraum.

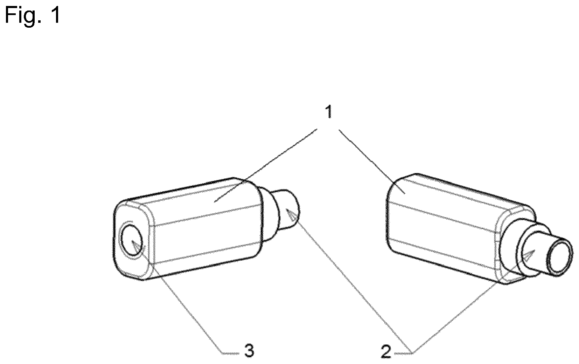

Figur 1 zeigt ein System zum Betrieb einer Pneumatikeinrichtung 1 zur Ermittlung von Prozess- und/oder Zustandsgrößen, welches mit einer Schnittstelle 2 mit der Pneumatikeinrichtung verbunden ist. Als Prozess- oder Zustandsgrößen sind Temperatur, Feuchte, Druck, Kraft, Position, Schall oder Vibrationen/Schwingungen, Fließgeschwindigkeit oder Lichtabsorption feststellbar. Das System zum Betrieb einer Pneumatikeinrichtung 1 ist hierfür mit einem oder mehreren entsprechenden Mitteln zur Datenerfassung ausgestattet. Weiter ist das System zum Betrieb einer Pneumatikeinrichtung 1 mit einer weiteren Schnittstelle 3 ausgestattet, an die die Steuerluft angeschlossen werden kann. Eine kabelgebundene oder drahtlose Weitergabe der Messdaten an eine weiterverarbeitende Einheit kann über eine nicht dargestellte Schnittstelle erfolgen.

Eine Anzeige kann von einer einfachen digitalen AN/AUS Darstellung bis hin zu vollumfänglichen Messwertangaben inklusive Zeitreihen vorgesehen sein. Wichtiger wird bei diesem System zum Betrieb einer Pneumatikeinrichtung 1 aber eine Weitergabe der Daten an eine übergeordnete Datenverarbeitungseinheit sein. Dazu werden die Daten eventuell noch durch Filter aufbereitet und dann weitergeleitet.

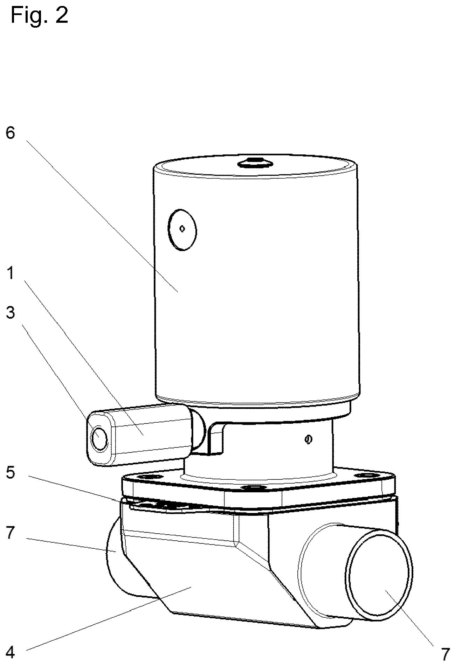

Die Figur 2 zeigt ein Membranventil 4 mit Anschlüssen 7, wobei ein Einlass und ein Auslass vorgesehen sind. Das Membranventil verfügt über eine Membran 5, die mittels einer Pneumatikeinrichtung 6 bewegt wird. An der Pneumatikeinrichtung 6 ist ein System zum Betrieb der Pneumatikeinrichtung 1 erfindungsgemäß vorgesehen.

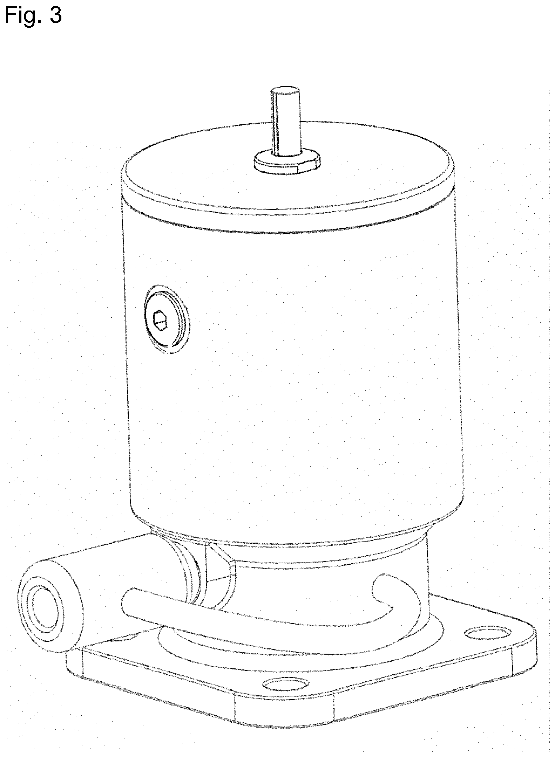

Figur 3 zeigt eine Variante, bei der ein weiterer Druckraum über eine Leitung mit der Pneumatikeinrichtung verbunden ist. In der dargestellten Variante führt die Leitung von einem Haubenraum zur Pneumatikeinrichtung. Bei dieser Variante kann die Pneumatikeinrichtung einen zusätzlichen Sensor aufweisen. Dabei kann es sich um einen Drucksensor und/oder einen Temperatursensor und/oder einen Feuchtigkeitssensor handeln. Mit mindestens einem der Sensoren ist die Erkennung eines Membranbruchs möglich.

Alternativ kann in einer nicht dargestellten Variante die Leitung von einem Federraum zur Pneumatikeinrichtung führen. Dabei handelt es um den Federraum einer Antriebseinrichtung.

## Patentansprüche

1. System zum Betrieb einer Pneumatikeinrichtung (1), **dadurch gekennzeichnet, dass** das System eine Anordnung zum Datenaustausch aufweist.

2. System nach Anspruch 1, **dadurch gekennzeichnet, dass** die Anordnung in einen Steuerluftanschluss integriert ist.

3. System nach Anspruch 1 oder 2, **dadurch gekennzeichnet, dass** die Anordnung mindestens eine Vorrichtung und/oder mindestens ein Element zur Datenerfassung aufweist.

4. System nach einem der Ansprüche 1 bis 3, **dadurch gekennzeichnet, dass** die Anordnung eine Vorrichtung zur Energieerzeugung, insbesondere eine Turbine und/oder Generator oder ein Piezoelement zur Erzeugung von Energie aus Druckstößen umfasst.

5. System nach einem der Ansprüche 1 bis 4, **dadurch gekennzeichnet, dass** die Anordnung ein Element zur Energiespeicherung umfasst.

6. System nach einem der Ansprüche 1 bis 5, **dadurch gekennzeichnet, dass** die Anordnung mindestens einen Aktor, insbesondere ein Magnetventil, umfasst.

7. System nach Anspruch 6, **dadurch gekennzeichnet, dass** der Aktor als einem 3/2-Wegeventil oder als 3/3-Wegeventil ausgebildet ist.

8. System nach einem der Ansprüche 1 bis 7, **dadurch gekennzeichnet, dass** die Anordnung ein Element zum Drosseln der Steuerluft umfasst.

9. System nach einem der Ansprüche 1 bis 8, **dadurch gekennzeichnet, dass** die Anordnung ein Sensorelement zum Erfassen des Hubs der Pneumatikeinrichtung umfasst.

10. System nach einem der Ansprüche 1 bis 9, **dadurch gekennzeichnet, dass** die Anordnung ein Sensorelement zum Erfassen der durchströmenden Steuerluft umfasst.

11. System nach einem der Ansprüche 1 bis 10, **dadurch gekennzeichnet, dass** die Anordnung mindestens ein Sensorelement zum Bestimmen der räumlichen Lage umfasst.

12. System nach einem der Ansprüche 1 bis 11, **dadurch gekennzeichnet, dass** die Anordnung ein Verbindungselement zum Anschluss eines externen Sensors umfasst.

13. System nach einem der Ansprüche 1 bis 12, **dadurch gekennzeichnet, dass** die Anordnung ein Element zur optischen und/oder akustischen Informationsausgabe und/oder ein Element zur Eingabe von Informationen umfasst.

14. System nach einem der Ansprüche 1 bis 13, **dadurch gekennzeichnet, dass** die Pneumatikeinrichtung (1) ein zusätzliches Sensorelement zur Membranbrucherkennung aufweist.

15. System nach einem der Ansprüche 1 bis 14, **dadurch gekennzeichnet, dass** ein weiterer Druckraum über eine Leitung mit der Pneumatikeinrichtung (1) verbunden ist.

16. Verfahren zur Konfiguration eines Systems zum Betrieb einer Pneumatikeinrichtung, **dadurch gekennzeichnet, dass** dieses System durch Verbinden mit mindestens einem Steuerluftanschluss konfiguriert wird.

17. Verwendung eines Systems zum Betrieb einer Pneumatikeinrichtung zur zustandsorientierten Instandhaltung.
